# EUROPEAN PATENT APPLICATION

(11) **EP 4 485 925 A1**
(43) Date of publication of application: **01.01.2025**
(21) Application number: 23182293.3
(22) Date of filing: 29.06.2023
(51) Int. Cl.: H04N 19/124, G06T 9/00, H04N 19/136, H04N 19/14, H04N 19/154, H04N 19/17, H04N 19/85

(54) **IMAGE NOISE COMPRESSION**

(71) Applicant: Koninklijke Philips N.V., 5656 AG Eindhoven (NL)
(72) Inventor: BERGNER, Frank, Eindhoven (NL); PEZZOTTI, Nicola, Eindhoven (NL); GOEDICKE, Andreas Georg, 5656 AG Eindhoven (NL); GRASS, Michael, Eindhoven (NL); CABALLERO JIMENEZ, Jose Maria, Eindhoven (NL); SCHNELLBÄCHER, Nikolas David, Eindhoven (NL)
(74) Representative: Philips Intellectual Property & Standards

(57) **Abstract**

Proposed are concepts pertaining to aiding and/or improving compression for image processing. In particular, embodiments of the invention propose concepts for compressing compression error estimates in consideration of an underlying noise distribution in the image (e.g., caused in the image by the image capture system). More efficient data compression may thus be realized, which may in turn support remote/cloud-based image processing by reducing an amount of (error) data that needs to be communicated to/from the remote/cloud-based image processing system.

## Description

### FIELD OF THE INVENTION

The present invention relates to the field of image processing, and in particular to the field of compressing an image captured by an image capture system.

### BACKGROUND OF THE INVENTION

With the development of cloud technologies, it has become attractive to outsource image processing currently performed on dedicated hardware. This is particularly the case for large images (in terms of data size), such as high-resolution/data medical images (including Computed Tomography (CT) and Magnetic Resonance Imaging (MRI) images).

Moving image processing (e.g. medical image reconstruction) to cloud/off-premise systems can, for example, reduce a total cost of ownership for an imaging system, allow scalability with respect to compute demands and facilitate deployment and updates of processing software.

However, to minimize impact on a workflow, it is preferable for the transfer of image data (e.g. raw image data and reconstructed images) to/from cloud/off-premise systems to occur in a near real-time fashion. Supporting such near real-time processing essentially depends on two factors: available network bandwidth; and image data size. Data requirements for some imaging applications, such as medical imaging, are large, whilst user facilities (such as medical facilities) typically have limited available bandwidth. Therefore, cloud implementation of image processing often requires a high level of data compression.

For medical images, conventional image compression methods (such JPEG) can be used on the raw image data, because these also have image-like representations. However, such compression methods are typically designed to be appealing to the human eye even with raising compression errors. This can be problematic for imaging applications (such as medical image processing and reconstruction) that need to consume the raw image data, e.g. because they may be susceptible to certain compression errors in the data. Furthermore, many conventional compression algorithms do not know how informative certain datapoints within the dataset are, thus potentially impacting image quality for accuracy-dependent use cases (such as image-based medical assessment or diagnosis).

Efficient strategies for image compression that reduce information loss and/or avoid image artifacts are therefore of interest.

### SUMMARY OF THE INVENTION

The invention is defined by the claims.

According to examples in accordance with an aspect of the invention, there is provided a method for compressing an image captured by an image capture system. The method comprises: processing the image with a compression algorithm to obtain compressed image data; obtaining a compression residuum describing a distribution of compression errors introduced in the compressed image data by the compression algorithm; and obtaining a noise distribution describing a distribution of noise introduced into the image by the image capture system. The method also comprises compressing data of the compression residuum based on the noise distribution to generate a compressed compression residuum.

Proposed concepts thus aim to provide schemes, solutions, concepts, designs, methods and systems pertaining to aiding and/or improving compression for image processing. In particular, embodiments of the invention propose concepts for compressing compression error estimates in consideration of an underlying noise distribution in the image noise introduced into the image by the image capture system (e.g. noise caused in the image by the image capture system). More efficient data compression may thus be realized, which may in turn support remote/cloud-based image processing by reducing an amount of (compression error) data that needs to be communicated to/from the remote/cloud-based image processing system.

Purely by way of example, proposed embodiments may enable a more efficient and/or effective approach to compressing a compression residuum describing a distribution of compression errors introduced in the compressed image data by the compression algorithm. Such an approach may be realized by making use of information about noise introduced into the image by the image capture system. Based on an underlying
distribution of noise in the image (created/caused by the image capture system), compression of the compression residuum of the image may be varied (or even optimized), e.g. by assigning a low bit rate to datapoints of the compression residuum having high measurement noise. Alternatively, the compression can be selected in a way to achieve a certain user-selected level of quality, e.g. signal-to-error ratios. A reduction of bit rate can be achieved on average by e.g. quantizing measurement samples using less bits per sample or by reducing the spatial resolution. Such an approach may enable a substantial level of compression. It may also provide the ability to tune information loss and data amount.

Embodiments are based on a realization that no compression process/algorithm is perfect, thus meaning the compression residuum of a compressed image (i.e. an image that has been processed using a compressor) contains errors caused by the compression algorithm. In particular, it is proposed that knowledge/information about the noise in the image may be leveraged to compress data of the compression residuum more effectively/efficiently (e.g. by adapting a compression parameter rate for a datapoint in the compression residuum in consideration of a level of image noise corresponding to this datapoint).

In other words, embodiments propose to tailor/adapt compression of datapoints in a compression residuum for a compressed image based on an underlying noise distribution in the image (inherent from the image capture system). For example, embodiments may be used in relation to medical image processing (e.g. CT image processing and MRI image processing) so as to support a medical professional when selecting treatment for a subject. That is, the image may, for example, comprise CT or MRI data. Such embodiments may also support clinical planning. Improved Clinical Decision Support (CDS) may therefore be provided by proposed concepts.

In some embodiments, compressing data of the compression residuum may comprise: for a datapoint of the compression residuum corresponding to a data location in the image: determining, based on the noise distribution, a noise value for the data location; and compressing the datapoint of the compression residuum based on the determined noise value for the data location.

In this way, embodiments may adapt the compression of a datapoint in a compression residuum of an image based on an underlying noise value at a corresponding location in the image (the noise being inherent from the image capture system). This may facilitate efficient compression of the compression residuum through adaptation of the compression to a high level of granularity (e.g. adapting compression on a pixel-by-pixel basis).

For example, compressing the datapoint of the compression residuum may comprise determining a compression bitrate value for the datapoint based on the determined noise value for the data location. For instance, compression bitrate values may be calculated based on a function that defines the bitrate value to be (inversely) proportional to noise. In this way, a datapoint in the compression residuum corresponding to a location in the image with a high noise value may be assigned a low bit rate for compression which allows for larger compression errors. The higher noise levels will make compression errors less apparent. Conversely, a datapoint in the compression residuum corresponding to a location in the image with a low noise value may be assigned a high bit rate for compression.

In some embodiments the average bit rate can be varied using adopted quantization. Furthermore, average bit rates can be adopted by changing the resolution of the compressed data. For some applications additional image transforms are favorable in order to condense information to a small amount of significant samples. Examples from literature are discrete cosine transform or wavelet transform. One example of a joint approach is Jpeg image compression where the wavelet decomposition analyses the image at different resolution levels and at different wavelet levels different levels of quantization are applied.

In an embodiment, obtaining a compression residuum may comprise: generating a reconstructed image from the compressed image data; determining differences between the image and the reconstructed image; and generating, based on the determined differences, a compression residuum describing a distribution of compression errors introduced in the compressed image data by the compression algorithm. For example, the compression residuum may be generated by a known compression algorithm, and that algorithm may have an associated error distribution (i.e. an inherent compression error profile) describing the error distribution in the compression residuum. In this way, the error distribution may be retrieved from a knowledge base.

Some embodiments may further comprise: prior to processing the image with a compression algorithm, processing the image with a de-noising algorithm to reduce noise in the image and to generate a noise residuum of the image; compressing data of the noise residuum based on the noise distribution to generate a compressed noise residuum.

By way of example, the noise distribution may comprise a photon flux distribution describing a distribution of photon flux levels for the image.

Some embodiments may further comprise determining a region of interest of the image. Compressing data of the compression residuum may then be further based on the region of interest. For example, compressing data of the compression residuum may comprise: selecting datapoints of the compression residuum based on the region of interest; and compressing the selected datapoints based on the noise distribution to generate a compressed noise residuum. In this way, only a fraction of the data of the residuum may be compressed, which, in combination with traditional lossless or lossy compression, may enable substantial compression factors.

For instance, the region of interest may comprise the most likely region(s) that contain compression errors. Also, the region of interest may be determined in many different ways, e.g. depending on what the region of interest is used to indicate.

By way of example, in an embodiment, determining a region of interest of the noise residuum may comprise: processing the image captured by an image capture system with an image processing algorithm to identify a region of interest of the image; and determining a region of interest of the compression residuum based on the identified region of interest of the image. For instance, the image processing algorithm may comprise an edge detection algorithm, because it may be assumed that the compression algorithm makes the most errors on and around object edges.

In some embodiments, obtaining a noise distribution may comprise: identifying the image capture system; and determining a noise distribution based on the identified image capture system. For example, the image capture system may have an associated noise distribution (i.e. an inherent noise profile) describing the noise it introduces into an image it captures, and this may be retrieved from a knowledge base.

According to another aspect of the invention, there may be provided a method for communicating an image captured by an image capture system, the method comprising: compressing the image according to a proposed embodiment.

In an embodiment, the compression algorithm may comprise a machine-learning algorithm having an associated error distribution.

Some embodiments may further comprise communicating the compressed image data and compressed compression residuum via a communication link. Some embodiments, where the noise residuum has been compressed, may also comprise communicating the compressed noise residuum via a communication link.

According to another aspect, there is provided a computer program product for compressing an image captured by an image capture system, wherein the computer program product comprises a computer-readable storage medium having computer-readable program code embodied therewith, the computer-readable program code configured to perform all of the steps of a proposed embodiment.

Thus, there may also be provided a computer system comprising: a computer program product according to proposed embodiment; and one or more processors adapted to perform a method according to a proposed concept by execution of the computer-readable program code of said computer program product.

According to another aspect, there is provided a system for compressing an image captured by an image capture system, the system comprising: an image compressor configured to process the image with a compression algorithm to obtain compressed image data; an interface component configured to obtain: a compression residuum describing a distribution of compression errors introduced in the compressed image data by the compression algorithm; and a noise distribution describing a distribution of noise introduced into the image by the image capture system; and a compression unit configured to compress data of the compression residuum based on the noise distribution to generate a compressed compression residuum.

The system may be remotely located from a user device for viewing an image. In this way, a user (such as a medical professional) may have an appropriately arranged system that can receive processed image data at a location remotely located from the image capture system and/or the image processing system. Embodiments may therefore enable a user to perform image processing using a local system (which may, for example, comprise a portable display device, such as a laptop, tablet computer, mobile phone, PDA, etc.). By way of example, embodiments may provide an application for a mobile computing device, and the application may be executed and/or controlled by a user of the mobile computing device.

The system may further include: a server device comprising the compression unit; and a client device comprising a user-interface. Dedicated data processing means may therefore be employed for the purpose of compressing a compression residuum, thus reducing processing requirements or capabilities of other components or devices of the system.

The apparatus may further include a client device, wherein the client device comprises the compression unit and a display unit. In other words, a user (such as a doctor or medical professional) may have an appropriately arranged client device (such as a laptop, tablet computer, mobile phone, PDA, etc.) which processes received compression residuum data in order to generate a compressed compression residuum. Purely by way of example, embodiments may therefore provide a medical image processing system that enables imaging of one or more subjects (e.g. patients) from a single location, wherein real-time communication between a subject and user (e.g. nurse or doctor) is provided and can have its functionality extended or modified according to proposed concepts, for example.

It will be understood that processing capabilities may therefore be distributed throughout the system/apparatus in different ways according to predetermined constraints and/or availability of processing resources.

Proposed embodiments may thus be employed in combination with conventional/existing image acquisition and/or processing systems. In this way, embodiments may integrate into legacy systems so as to improve and/or extend their functionality and capabilities. An improved medical image acquisition/processing system may therefore be provided by proposed embodiments, for example.

Thus, there may be proposed concepts for improved compression of a compression residuum. Such improved compression may, for instance, support a substantial level of data compression whilst ensuring minimal information loss. By leveraging information about noise introduced into the image by the image capture system, more efficient and/or effective compression of compression errors introduced in the compressed image data may be realized. The proposed concept(s) may thus enable improved (e.g. more flexible or optimized) image compression.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified block diagram of a system for compressing an image captured by an image capture system according to an embodiment;
Fig. 2 is a simplified flow diagram of a method for compressing an image captured by an image capture system according to a proposed embodiment;
Fig. 3 depicts an overall flow of an image compression method according to an embodiment, wherein a photon flux distribution describing a distribution of photon flux levels for the image is employed as an estimation of the noise distribution in the image;
Fig. 4 depicts a modification to the approach shown in Fig. 3, wherein an additional denoising preprocessing step is employed; and
Fig. 5 is a simplified block diagram of a computer within which one or more parts of an embodiment may be employed.

### DETAILED DESCRIPTION OF THE EMBODIMENTS

The invention will be described with reference to the Figures.

The invention proposes concepts for aiding and/or improving the compression of compression error estimates (i.e. a compression residuum of an image). In particular, embodiments of the invention may provide a method and/or system for compressing data describing compression errors introduced in compressed image data by a compression algorithm, and this may enable substantial compression factors whilst retaining useful information/data in a compression residuum.

In particular, proposed concepts may provide an approach to enabling tailored data compression that inherently takes noise in the image from the image capture system into account. Accordingly, embodiments may improve levels of error data compression which, in turn, enables communication of error data to remote/cloud image processing systems via a bandwidth-limited communication link. This may support real-time image processing via remote/cloud processing environments.

For instance, embodiments may be particularly beneficial for compressing error estimates for compressed CT images, and such embodiments may achieve this by employing compressor error identification and noise distribution identification. Embodiments may therefore be employed in, or in connection with, CT and/or MRI imaging systems that employ compression algorithms.

Purely by way of explanation, embodiments assume the use of a compressor (i.e. image compression algorithm/component) which applies a compression algorithm to an input image outputs compressed image data and has (and may even also output) a corresponding compression residuum describing a distribution of compression errors introduced in the compressed image data by the compression algorithm. The compression residuum is the difference between the de-compressed result and the input image (i.e. original image data). That is, the compression residuum represents the errors introduced by the compression algorithm when generating the compressed image. For instance, after application of a compression algorithm to image data, one obtains compressed image data, which is considered the information domain, and the corresponding compression residuum, which is considered the error/noise domain. As detailed previously above, the proposed concepts focus on efficiently compressing the error/noise domain to allow a high bound on potential compression factors for the overall data (compressed images and associated compression error(s)).

A compression concept is proposed that takes side information about the measured raw image data. The compression process is then tailored to vary its bitrate within the dataset to push the compression error into sub-regions in the data that are less critical for the reconstruction. This may obfuscate the compression error in a way that visible reconstruction artifacts are prevented.

Also, in the following description, reference is made to embodiments used in conjunction with CT projection data. Proposed embodiments, however, are not limited to CT projection data and may instead by used in relation to a wide variety of images and associated compression residuums.

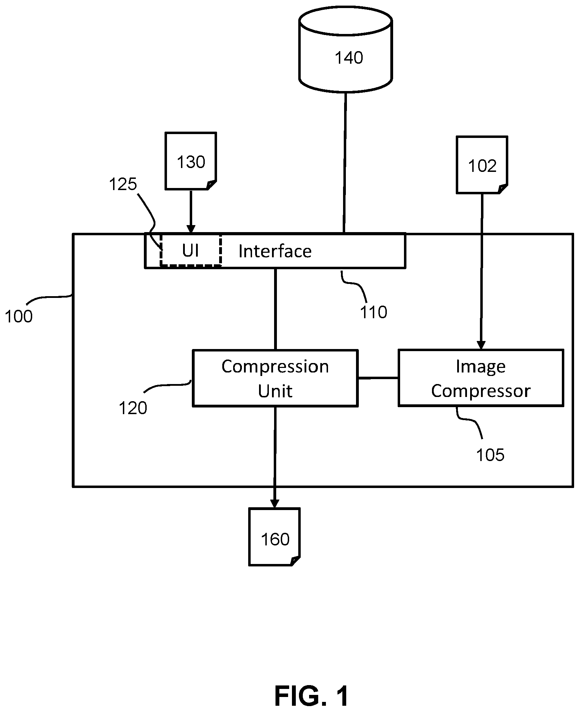

By way of example, a proposed embodiment will now be described with reference to Fig. 1.

Fig. 1 is a simplified block diagram of a system 100 for compressing an image 102 captured by an image capture system according to an embodiment of the invention.

The system 100 comprises an image compressor 105 configured to process the image 102 with a compression algorithm to obtain compressed image data.

The system also comprises an interface component 110 and a compression unit 120.

The interface component 110 comprises a user interface 125 that is configured to receive a user input providing a compression residuum for the compression algorithm of the image compressor 105. That is, the embodiment of Fig. 1 is adapted to receive a user-provided compression residuum 130. However, other embodiments may be configured to obtain a compression residuum from other sources, such as from a compression algorithm or the image compressor 105.

The interface component 110 is also configured to obtain a noise distribution describing a distribution of noise introduced into the image by the image capture system. Here, the interface component 100 is adapted to retrieve the noise distribution from a first database 140 of noise distributions. The first database 140 comprises a knowledge base of noise distributions for various image capture systems, thus providing a resource from which a noise distribution associated with the image capture system used to generate the image can be retrieved.

The compression unit 120 of the system 100 is then configured to compress data of the compression residuum based on the obtained noise distribution, thereby generating a compressed compression residuum 160. Purely by way of example, the compression unit 120 varies the bit rate for compression of each datapoint of the compression residuum according to the noise for the corresponding pixel indicated by the noise distribution. For instance, a low bit rate for compression is used for a datapoint of the compression residuum corresponding to a data location in the image having high noise, whereas a high bit rate for compression is used for a datapoint of the noise residuum corresponding to a data location in the image having low noise.

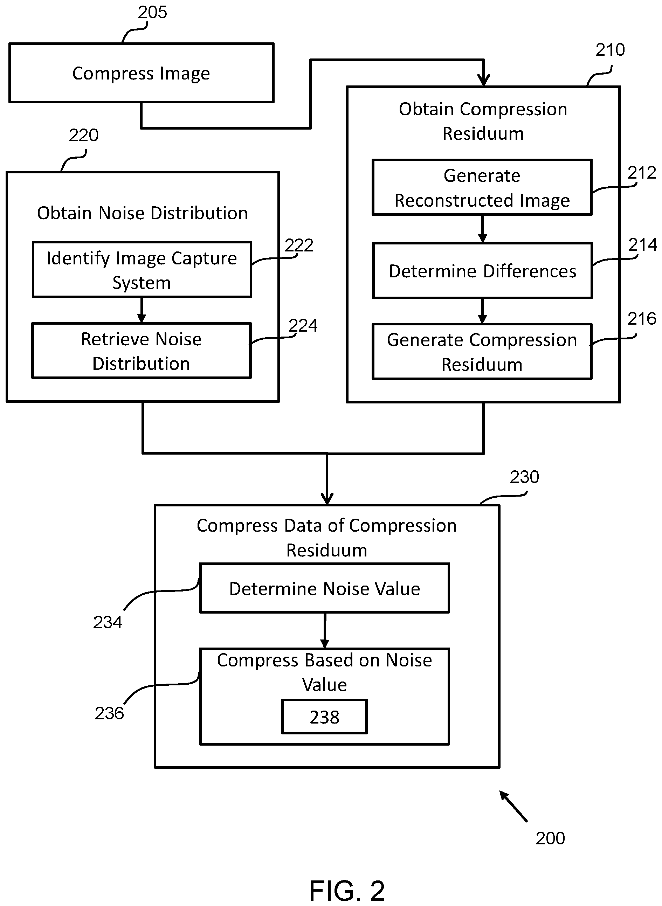

By way of further demonstration of the proposed concept(s), an exemplary method for compressing a compression residuum will now be described with reference to Fig. 2.

Fig. 2 depicts a simplified flow diagram of a method 200 for compressing an image captured by an image capture system according to a proposed embodiment.

The method 200 begins with step 205 of processing the image with a compression algorithm to obtain compressed image data.

The method then proceeds to step 210 of obtaining a compression residuum associated with the compression algorithm, the compression residuum describing a distribution of compression errors introduced in the compressed image data by the compression algorithm.

Here, step 210 comprises three sub-steps 212, 214 and 216. In step 212, a reconstructed image (i.e. a de-compressed image) is generated from the compressed image data. Then, in step 214, the differences between the image and the reconstructed image are determined. In step 216, based on the determined differences, a compression residuum is generated describing a distribution of compression errors introduced in the compressed image data by the compression algorithm.

The method also comprises step 220 of obtaining a noise distribution describing a distribution of noise introduced into the image by the image capture system. Here, step 220 comprises two sub-steps 222 and 224. In step 222, the image capture system that captured/created the image is identified. For example, using a user input signal or information (e.g. metadata) provided with the image or compression residuum, the image capture system that generated the image is determined. Then, in step 224, a noise distribution is determined based on the identified image capture system. This may, for example, comprise retrieving a noise distribution associated with the image capture system from a knowledge base of noise distributions.

After completing steps 210 and 220, the method proceeds to step 230 of compressing data of the compression residuum based on the noise distribution to generate a compressed compression residuum. Completion of step 230 results in the generation of a compressed compression residuum.

In this embodiment, step 230 of compressing data of the compression residuum comprises undertaking two sub-steps for datapoints of the compression residuum. More specifically, for a datapoint of the noise residuum corresponding to a data location in the image, the following sub-steps steps (234 and 236) are executed:
Sub-step 234 - determining, based on the noise distribution, a noise value for the data location; and
Sub-step 236 - compressing the datapoint of the compression residuum based on the determined noise value for the data location (and optionally its neighborhood). Here, sub-step 236 comprises the step 238 of determining a compression bitrate value for the datapoint based on the determined noise value for the data location and its neighborhood. More specifically, in this exemplary embodiment, step 238 of determining a compression bitrate value comprises calculating the compression bitrate value based on a function that defines the bitrate value to be inversely proportional to noise. In this way, a high bit rate for compression is used for datapoints of the compression residuum corresponding to a location in the image having a low noise, whereas a low bit rate for compression is used for datapoints of the compression residuum having high noise.

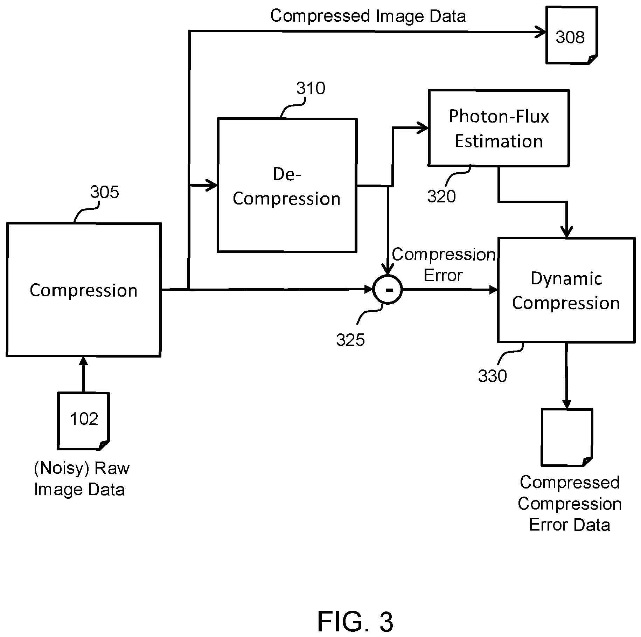

By way of yet further explanation of the proposed concept(s), an exemplary workflow that utilizes the proposed compression concept(s) will now be described with reference to Fig. 3.

Fig. 3 depicts an overall flow of an image compression method according to an embodiment, wherein a photon flux distribution describing a distribution of photon flux levels for the image is employed as an estimation of the noise distribution in the image.

More particularly, Fig. 3 is a schematic depiction of a proposed efficient approach for compressing a compression residuum. Here, the image 102 is a CT (raw) image that includes noise introduced by the CT imaging system during capture of the CT image data. The image 102 therefor comprises (noisy) raw image data.

In a first stage, compression 305 of the raw image data is undertaken with a high compression rate to transmit a map of line integrals 308. Along with this, additional information about the unattenuated photon-flux on the detector as well as the scaling of the flux for the individual projections is transmitted. On transmitter and receiver side approximated photon-flux levels 320 can be reconstructed with these, which can be translated into estimations of present measurement noise (e.g. Poisson statistics of incident photons).

In a second stage, the compression residuum (i.e. difference 325 between original raw image data and de-compressed/reconstructed 310 image data) is used to transmit additional information that was not captured in the first stage. In one example a quantization 330 is performed on the individual samples of the compression residuum.

The bitrate and number/range of quantization levels are steered by the estimated photon flux level (i.e. noise level) 320 in the individual samples: a pixel below a (potentially application dependent) photon flux threshold value (indicating dominantly noise-only and therefore irrelevant scan content) are set to zero (or assigned to the highest possible compression encoding class):
Below this threshold, pixels with low flux are affected by a significant noise level and therefore need to be spared from additional errors by the quantization - a low bitrate is used for these. On the other hand, for pixels with high flux (i.e. low measurement noise) additional quantization errors are less critical - high bitrates are used for these.

That is, compression dynamically/adaptively controls the bitrates by an additionally provided uncertainty (i.e. noise) map/distribution. Here, the distribution of noise is based on the photon-flux levels from CT detector readings, and this is used to inform the compression scheme how important different parts of the initially acquired raw data is.

To further prevent artifacts arising in the later reconstruction, the above method can be modified to further obfuscate the quantization error for the reconstruction:
In one embodiment the residuum is transformed with a discrete cosine compression (e.g. discrete cosine transform, DCT) or discrete wavelet compression (e.g. discrete wavelet transform, DWT), which is similar to the methods used in JPEG and JPEG2000 compression, respectively. As the residuum might contain different frequencies, a steering of the quantization levels in the individual DCT or DWT coefficients can be used to shape the errors of the residuum in the individual frequencies, so that the compression error can be shaped like measurement noise. Furthermore, a pseudo-random jittering of quantization stages can be used to hide reoccurring compression errors in multiple projections, which might otherwise cause ring artifacts.

In another embodiment, the compression error may be shaped to mimic a reduction of photon flux and therefore higher noise levels. The compression algorithm may additionally alter the meta information, like tube current, of the dataset to make the reconstruction aware of the additional noise present in the data. Alternatively, if the compression leads to a reduction of the noise, an increased photon-flux level could be indicated.

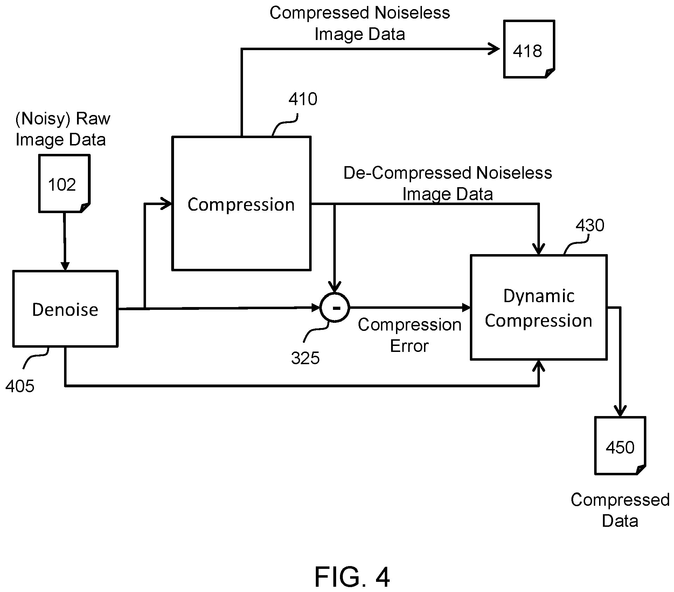

Turning now to Fig. 4, there is depicted a modification of the approach shown in Fig. 3, wherein an additional denoising 405 preprocessing step is employed.

More specifically, Fig. 4 is a schematic depiction of a compression residuum compression method according to another embodiment, wherein a denoising preprocessing step is highly tailored to separate the noisy raw data into estimated noise and noiseless data.

The denoised data is compressed 410 with a neuronal network or conventional compression algorithm, which may operate better due to the absence of noise. An advantage of this approach is that it provides three different, intermediate results: The compressed noiseless data 418 that can be reconstructed again also on the sender, the error due to the compression of the noiseless data, and the estimated noise (i.e. the noise residuum).

Here, it is noted that the noise residuum is the difference between the denoised result and the input image (i.e. original noisy data) 102. That is, the noise residuum represents the noise removed from the input image to generate the denoised result. For instance, after image data denoising, one obtains denoised image data, which is considered the information domain, and the corresponding noise residuum, which is considered the noise domain.

For transmission one is now able to assign and tune additional bandwidth for transmitting parts 450 of the compression error or the estimated noise along with the compressed, noiseless raw data. Methods like quantization can actually be used to hide the compression error behind parts of the transmitted, estimated noise.

From the above-described embodiments, it will be appreciated that there is proposed a compression scheme that varies its data rate based on the estimated amount of measurement noise present in the image to perform a noise-shaping in a way that it is beneficial for the final reconstruction. Such noise shaping can be tailored further to also incorporate information from additional, previous denoising or compressions stages to obfuscate potential errors introduced there. Purely by way of example, local photon-flux measurements or estimation may be used to estimate noise levels in the image and thus provide a noise distribution.

In an embodiment, the compression bit rate may be chosen such that the sum of quantization noise and measurement noise remains below a user defined threshold. Thus, additional noise caused by compression is mainly added to samples that do not yet have too much noise.

In another version, the quantization noise may be higher in noisier areas. As measurement noise relates to dose in CT imaging, for example, this can be modelled equivalent to a noise increase caused by a dose reduction, and can be indicated by a lower tube voltage indication in metadata.

In a further embodiment, an initial denoising stage may be employed, followed by a compression stage that takes the explicit noise estimate from the denoiser into account.
A proposed concept may thus be summarized as performing a lossy data compression of raw image data that adopts a per-pixel bitrate based on estimated noise level within the individual pixel.

Optionally, embodiments may be limited to a region of interest (ROI). Such an approach may enable the adaptation of settings based on different system protocols, clinical settings, and user preferences for example. ROI selection may be achieved in many different ways. In general, it is reasonable to assume that a compression algorithm makes the most errors on and around object edges within an image. To detect these regions, an edge detection algorithm/method may be used on the denoised image data to identify a ROI. The image data may provide information on the approximate noise distribution, given the image capture system parameters are known. Such knowledge can enable an additional selection criterion to further define/refine an initial ROI based on the detected edges.

A resulting ROI may represent only a fraction of the data, which, in combination with traditional lossless or lossy compression, enables substantial compression factors.

Considering the design and application of the proposed concept(s), the following additional embodiments may be considered:
- The edge detection part of the ROI selection may be implemented by various non-AI/AI algorithms suited for the task. The task at hand is to detect ROI(s) that contain the most significant compression errors.
- Compression and/or denoising can also be performed by non-AI methods.
- The ROI selection from the residuum may be done in more sophisticated ways, than the ones outlined in the above description. More specifically, embodiments may employ AI techniques that aim to directly estimate the compression residuum directly from the given compressed data.
- The invention may be applicable to all CT systems including conventional, spectral, photon counting, dark field and C-arm systems (e.g., XperCT).
- The approach can be extended to other modalities beyond CT, if data compression performed in a similar manner and a good emulation of image noise is possible. One example would be cone beam computed tomography (CBCT).

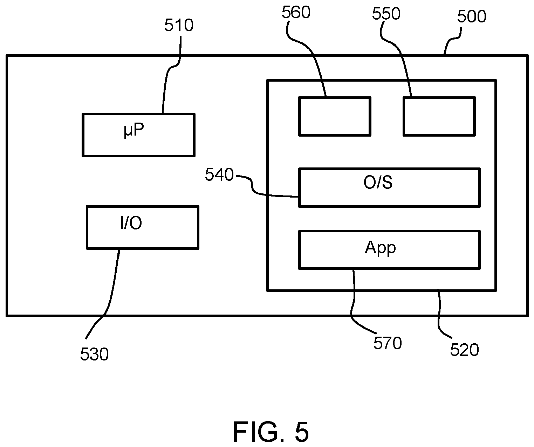

Fig. 5 illustrates an example of a computer 500 within which one or more parts of an embodiment may be employed. Various operations discussed above may utilize the capabilities of the computer 500. For example, one or more parts of the proposed compression system may be incorporated in any element, module, application, and/or component discussed herein. In this regard, it is to be understood that system functional blocks can run on a single computer or may be distributed over several computers and locations (e.g., connected via internet).

The computer 500 includes, but is not limited to, PCs, workstations, laptops, PDAs, palm devices, servers, storages, and the like. Generally, in terms of hardware architecture, the computer 500 may include one or more processors 510, memory 520, and one or more I/O devices 570 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 510 is a hardware device for executing software that can be stored in the memory 520. The processor 510 can be virtually any custom made or commercially available processor, a central processing unit (CPU), a digital signal processor (DSP), or an auxiliary processor among several processors associated with the computer 500, and the processor 510 may be a semiconductor-based microprocessor (in the form of a microchip) or a microprocessor.

The memory 520 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 520 may incorporate electronic, magnetic, optical, and/or other types of storage media. Note that the memory 520 can have a distributed architecture, where various components are situated remote from one another, but can be accessed by the processor 510.

The software in the memory 520 may include one or more separate programs, each of which comprises an ordered listing of executable instructions for implementing logical functions. The software in the memory 520 includes a suitable operating system (O/S) 550, compiler 540, source code 530, and one or more applications 560 in accordance with exemplary embodiments. As illustrated, the application 560 comprises numerous functional components for implementing the features and operations of the exemplary embodiments. The application 560 of the computer 500 may represent various applications, computational units, logic, functional units, processes, operations, virtual entities, and/or modules in accordance with exemplary embodiments, but the application 560 is not meant to be a limitation.

The operating system 550 controls the execution of other computer programs, and provides scheduling, input-output control, file and data management, memory management, and communication control and related services. It is contemplated by the inventors that the application 560 for implementing exemplary embodiments may be applicable on all commercially available operating systems.

Application 560 may be a source program, executable program (object code), script, or any other entity comprising a set of instructions to be performed. When a source program, then the program is usually translated via a compiler (such as the compiler 540), assembler, interpreter, or the like, which may or may not be included within the memory 520, so as to operate properly in connection with the O/S 550. Furthermore, the application 560 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 570 may include input devices such as, for example but not limited to, a mouse, keyboard, scanner, microphone, camera, etc. Furthermore, the I/O devices 570 may also include output devices, for example but not limited to a printer, display, etc. Finally, the I/O devices 570 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 570 also include components for communicating over various networks, such as the Internet or intranet.

If the computer 500 is a PC, workstation, intelligent device or the like, the software in the memory 520 may further include a basic input output system (BIOS) (omitted for simplicity). The BIOS is a set of essential software routines that initialize and test hardware at startup, start the O/S 550, and support the transfer of data among the hardware devices. The BIOS is stored in some type of read-only-memory, such as ROM, PROM, EPROM, EEPROM or the like, so that the BIOS can be executed when the computer 500 is activated.

When the computer 500 is in operation, the processor 510 is configured to execute software stored within the memory 520, to communicate data to and from the memory 520, and to generally control operations of the computer 500 pursuant to the software. The application 560 and the O/S 550 are read, in whole or in part, by the processor 510, perhaps buffered within the processor 510, and then executed.

When the application 560 is implemented in software it should be noted that the application 560 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 560 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The apparatus of Fig. 1, and the methods of Figs 2-4, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

Data determined according to an embodiment may be stored on a storage medium. Such data may be transmitted as a signal modulated onto an electromagnetic carrier wave. The signal may be defined according to a standard for digital communications. The carrier wave may be an optical carrier, a radio-frequency wave, a millimeter wave, or a near field communications wave. It may be wired or wireless.

To the extent that an embodiment is implemented partly or wholly in hardware, the blocks shown in the diagrams may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method for compressing an image captured by an image capture system, the method comprising:
processing (205) the image with a compression algorithm to obtain compressed image data;
obtaining (210) a compression residuum describing a distribution of compression errors introduced in the compressed image data by the compression algorithm;
obtaining (220) a noise distribution describing a distribution of noise introduced into the image by the image capture system; and
compressing (230) data of the compression residuum based on the noise distribution to generate a compressed compression residuum.

2. The method of claim 1, wherein compressing data of the compression residuum comprises:
for a datapoint of the compression residuum corresponding to a data location in the image:
determining (234), based on the noise distribution, a noise value for the data location; and
compressing (236) the datapoint of the compression residuum based on the determined noise value for the data location.

3. The method of claim 2, wherein compressing (236) the datapoint of the compression residuum comprises determining (238) a compression bitrate value for the datapoint based on the determined noise value for the data location,
and preferably wherein determining a compression bitrate value comprises calculating the compression bitrate value based on a function that defines the bitrate value to be inversely proportional to noise.

4. The method of any of claims 1 to 3, wherein obtaining (210) a compression residuum comprises:
generating (212) a reconstructed image from the compressed image data;
determining (214) differences between the image and the reconstructed image; and
generating (216), based on the determined differences, a compression residuum describing a distribution of compression errors introduced in the compressed image data by the compression algorithm.

5. The method of any of claims 1 to 4, further comprising:
prior to processing the image with a compression algorithm, processing (405) the image with a de-noising algorithm to reduce noise in the image and to generate a noise residuum of the image;
compressing data of the noise residuum based on the noise distribution to generate a compressed noise residuum.

6. The method of any of claims 1 to 5, wherein the noise distribution comprises a photon flux distribution describing a distribution of photon flux levels for the image.

7. The method of any of claims 1 to 6, further comprising:
determining a region of interest of the image,
and wherein compressing data of the compression residuum is further based on the region of interest.

8. The method of clam 7, wherein compressing (230) data of the compression residuum comprises:
selecting datapoints of the compression residuum based on the region of interest; and
compressing the selected datapoints based on the noise distribution to generate a compressed noise residuum.

9. The method of claim 7 or 8, wherein determining a region of interest of the compression residuum comprises:
processing the image captured by an image capture system with an image processing algorithm to identify a region of interest of the image; and
determining a region of interest of the compression residuum based on the identified region of interest of the image,
and optionally wherein the image processing algorithm comprises an edge detection algorithm.

10. The method of any of claims 1 to 9, wherein obtaining (220) a noise distribution comprises:
identifying (222) the image capture system; and
determining (224) a noise distribution based on the identified image capture system.

11. A method of communicating an image captured by an image capture system, the method comprising:
compressing the image according to the method of any of claims 1 to 10.

12. The method of claim 11, further comprising:
communicating the compressed image data and the compressed compression residuum via a communication link.

13. The method of claim 11 or 12, when dependent upon claim 5
communicating the compressed image data and the compressed noise residuum via a communication link

14. A computer program comprising computer program code means adapted, when said computer program is run on a computer, to implement the method of any of claims 1 to 13.

15. A system for compressing an image captured by an image capture system, the system comprising:
an image compressor (105) configured to process the image with a compression algorithm to obtain compressed image data;
an interface component (110) configured to obtain: a compression residuum describing a distribution of compression errors introduced in the compressed image data by the compression algorithm; and a noise distribution describing a distribution of noise introduced into the image by the image capture system; and
a compression unit (120) configured to compress data of the compression residuum based on the noise distribution to generate a compressed compression residuum.
